# EUROPÄISCHE PATENTSCHRIFT

(11) **EP 2 125 351 B1**
(45) Veröffentlichungstag und Bekanntmachung des Hinweises auf die Patenterteilung: **22.08.2012**
(21) Anmeldenummer: 07872822.7
(22) Anmeldetag: 28.11.2007
(51) Int. Cl.: B29D 30/60, B60C 19/08

(54) **VERFAHREN ZUR HERSTELLUNG EINES FAHRZEUGLUFTREIFENS UND FAHRZEUGLUFTREIFEN**
METHOD FOR THE PRODUCTION OF A VEHICLE TIRE, AND VEHICLE TIRE
PROCÉDÉ DE FABRICATION D'UN PNEU DE VÉHICULE ET PNEU DE VÉHICULE

(30) Priorität: 29.01.2007 DE 102007004327
(43) Veröffentlichungstag der Anmeldung: 02.12.2009
(73) Patentinhaber: Continental Reifen Deutschland GmbH, 30165 Hannover (DE)
(72) Erfinder: FRERICHS, Udo, 30855 Langenhagen (DE)
(74) Vertreter: Finger, Karsten
(86) Internationale Anmeldenummer: PCT/EP2007/062931
(87) Internationale Veröffentlichungsnummer: WO 2008/101555

(56) Entgegenhaltungen:
- EP-A- 1 632 367
- EP-A- 1 657 050
- EP-A- 1 738 893

## Beschreibung

Die Erfindung betrifft ein Verfahren zur Herstellung eines Fahrzeugluftreifens mit einem eine elektrisch leitfähige Laufstreifenbase und eine elektrisch nicht leitfähige Laufstreifencap aufweisenden Laufstreifen, wobei zumindest die Laufstreifencap durch Spulen von zumindest einem Materialstreifen aus einer Kautschukmischung hergestellt wird, und wobei lokal eine elektrisch leitfähige Kautschukmischung, welche zwischen der Außenseite der Laufstreifencap und der Laufstreifenbase eine elektrisch leitfähige Verbindung herstellt, während des Spulens des Capstreifens, vor dem Auflegen desselben, auf zumindest eine der Seiten des Capstreifens aufgebracht wird.

Es ist bekannt, dass Kieselsäure enthaltende Laufstreifen, die den Fahrzeugluftreifen an sich gute Fahreigenschaften, wie einen geringen Rollwiderstand und gute Nassrutscheigenschaften, verleihen, elektrisch kaum leitfähig sind, sodass elektrostatische Aufladungen unangenehme Entladungsvorgänge verursachen können. Es ist daher üblich, bei solchen Fahrzeugluftreifen im Laufstreifen durch elektrisch leitfähigen Gummi Passagen zu schaffen, die eine elektrisch leitfähige Verbindung von der Außenfläche des Laufstreifens zum Unterbau herstellen.

Ein Verfahren der eingangs genannten Art ist aus der EP-A-1 632 367 bekannt. Dabei wird auf die Oberfläche des die Laufstreifencap bildenden Materialstreifens eine leitfähige Lösung aufgetragen, die im fertigen Reifen einen leitfähigen Film bildet. Bei dem aus der EP-A-1 657 050 bekannten Verfahren wird ein Teil der Laufstreifencap simultan aus einem nicht leitfähigen Kautschukmischungsstreifen und einem leitfähigen Kautschukmischungsstreifen gewickelt, wobei höchstens fünf Wicklungen über den Laufstreifenumfang gebildet werden. Die EP-A-1 738 893 beschreibt ein hybrides Kautschukband, aus welchem die Laufstreifencap spiraliges Wickeln hergestellt wird und welches mit einer Oberflächenschicht aus einer leitenden Kautschukmischung versehen ist.

Bei dem aus der US 6,834,693 B1 bekannten Verfahren wird der Laufstreifen mit einer Extrusionsvorrichtung hergestellt, welche einen den kompletten Laufstreifen erzeugenden Hauptextruder und einen mit diesem zusammenarbeitenden Mikroextruder aufweist, welcher eine elektrisch leitfähige Kautschukmischung direkt lokal in einen Abschnitt der unvulkanisierten und heißen Kautschukmischung, welcher aus dem Hauptextruder kommt, einfügt. Der fertige Reifen weist daher im Laufstreifen einen in Umfangsrichtung verlaufenden Einsatz aus elektrisch leitfähigem Gummi auf.

Aus der US 6,951,233 B1 ist ein Verfahren zur Herstellung eines Laufstreifens aus einer Laufstreifencap und einer Laufstreifenbase bekannt, welche beide aus einer elektrisch nicht leitenden Kautschukmischung hergestellt werden. Die Laufstreifenbase und die Laufstreifencap werden jeweils separat mit einem Hauptextruder hergestellt, wobei in jede dieser Kautschukmischungen in Umfangsrichtung und lokal begrenzt durch Coextrusion eine elektrisch leitende Kautschukmischung eingefügt wird.

Bei den aus der US 6,834,693 B1 und der US 6,951,233 B1 bekannten Verfahren erfolgt daher ein Einfügen elektrisch leitfähiger Passagen in den Laufstreifen bzw. in die Laufstreifencap und die Laufstreifenbase während der Extrusion: Diese bekannten Verfahren lassen sich bei Laufstreifen, bei denen zumindest die Laufstreifencap durch Spulen eines Materialstreifens aus einer Kautschukmischung hergestellt wird, nicht anwenden.

Der Erfindung liegt die Aufgabe zu Grunde, auf einfache Weise in einer durch Spulen eines Materialstreifens hergestellten Laufstrcifcncap aus einer elektrisch nicht leitfähigen Kautschukmischung lokal eine elektrisch leitfähige Kautschukmischung einbringen zu können.

Gelöst wird die gestellte Aufgabe erfindungsgemäß dadurch, dass die elektrisch leitfähige Kautschukmischung entweder auf den Capstreifen gespritzt wird oder dass Profilstücke aus der elektrisch leitfähige Kautschukmischung in gegenseitigen Abständen auf den Capstreifen aufgebracht werden. Vorteihafte Weiterbildungen der Erfindung sind Gegenstand der abhängigen Ansprüche:

Die Erfindung gestattet auf eine besonders rationelle Weise, nämlich ohne den Spulvorgang des Capstreifens unterbrechen zu müssen, das Aufbringen von elektrisch leitfähigem Material, welches im fertigen Reifen eine oder mehrere elektrisch leitfähige Passage(n) am Umfang des Laufstreifens bildet.

Die einzelnen Mischungspatches lassen sich ebenfalls auf einfache Weise aufspritzen.

Eine Kette aus leitfähigen Mischungsstücken lässt sich gemäß der Erfindung dadurch bilden, dass die Profilstücke von einem extrudierten Streifen aus elektrisch leitfähiger Kautschukmischung abgeschnitten werden und unter einem gegenseitigen Abstand auf den Capstreifen aufgebracht werden.

Sind die verwendeten Streifen bzw. die verwendete Kautschukmischung für den elektrisch leitfähigen Einsatz im Reifen vorvernetzt, so erleichtert dies die Handhabung beim Aufbringen auf den Capstreifen.

Das elektrisch leitfähig Material wird insbesondere einmal über den Umfang des Laufstreifens umlaufend angebracht. Es kann jedoch, insbesondere im Zusammenhang mit der vorgesehenen Laufstreifenprofilierung, von Vorteil sein, elektrisch leitfähiges Material an mehreren Umfangsabschnitten des Capstreifens aufzubringen, sodass auch im fertigen Reifen Umfangsabschnitte vorhanden sind, die eine elektrisch leitfähige Verbindung gewährleisten.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 einen Querschnitt durch den Laufstreifenbereich eines Fahrzeugluftreifens mit einer Ausführungsform gemäß dem Stand der Technik,
Fig. 2 und 3 Stadien der Herstellung des Laufstreifens des Fahrzeugluftreifens aus Fig. 1 und
Fig. 4 eine erfindungsgemäße Ausführungsvariante der Herstellung eines elektrisch leitfähigen Einsatzes im Laufstreifen.

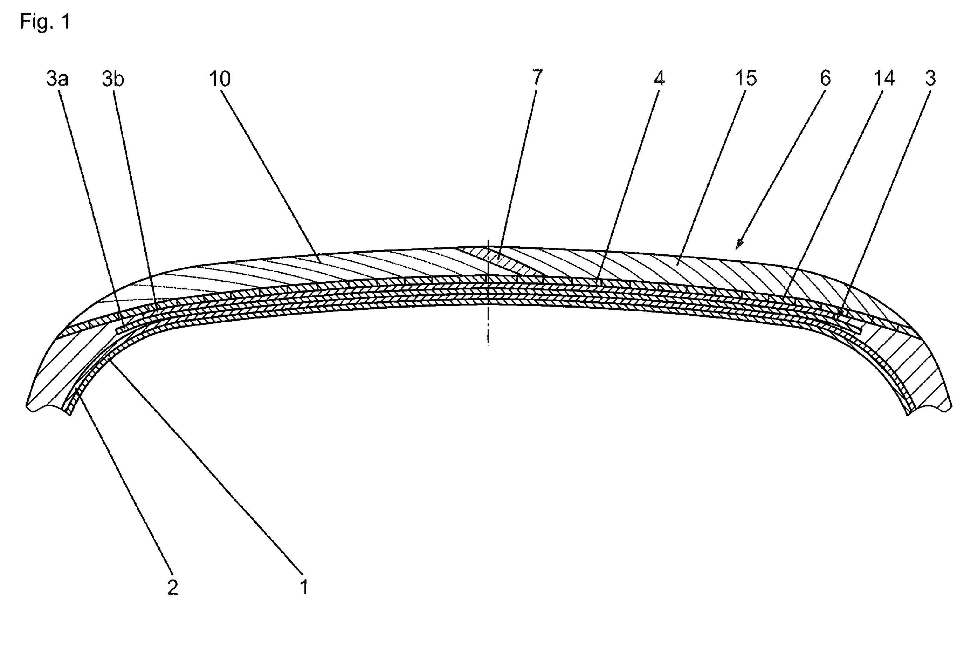

Fig. 1 zeigt schematisch einen Querschnitt durch den Laufstreifenbereich eines noch unvulkanisierten Fahrzeugluftreifens für PKW in Radialbauart. Der Reifen weist eine Innenschicht 1, eine Radialkarkasse 2, zwei Gürtellagen 3a, 3b, die durch eine nicht gezeigte Gürtelbandage abgedeckt sein können, und einen Laufstreifen 6 auf. Der Laufstreifen 6 besteht aus einer unmittelbar auf dem Gürtelpaket 3 aufgebrachten Laufstreifenbase 4 und einer Laufstreifencap 5. Bei der Vulkanisation des Rohreifens in einer Vulkanisationsform wird in die Laufstreifencap 5 eine Profilierung aus Nuten, Rillen, Einschnitten und dergleichen eingeprägt.

Die Laufstreifenbase 4 wird durch spiraliges Wickeln, sogenanntes Spulen, eines Materialstreifens 14 aus einer elektrisch leitfähigen, Ruß enthaltenden Kautschukmischung erstellt. Dieser Materialstreifen 14 wird Stoß-an-Stoß liegend in Reifenumfangsrichtung auf das Gürtelpaket 3 aufgebracht. Auch die Laufstreifencap 5 wird durch Spulen eines Materialstreifens 15 hergestellt, der jedoch aus einer elektrisch nicht leitfähigen Kautschukmischung hergestellt ist und als Füllstoff Kieselsäure oder keinen oder höchstens einen sehr geringen Anteil an Ruß enthält. Die Laufstreifencap 5 wird dabei, wie es auch in Fig. 1 gezeigt ist, aus in Umfangsrichtung umlaufenden Windungen des Materialstreifens 15 unter gegenseitiger Überlappung der einzelnen Windungen erstellt. Die Laufstreifencap 5 ist durch einen aus einer elektrisch leitfähigen Gummimischung bestehenden Streifen 7, welcher über den gesamten Reifenumfang verläuft, etwa mittig in zwei Hälften geteilt. Der Streifen 7, welcher beispielsweise aus der Mischung der Laufstreifenbase 4 hergestellt ist, stellt daher bei fertigem Reifen eine elektrisch leitfähige Verbindung von der Laufstreifenaußenseite zum leitfähigen Unterbau, der Laufstreifenbase 4, des Reifens sicher.

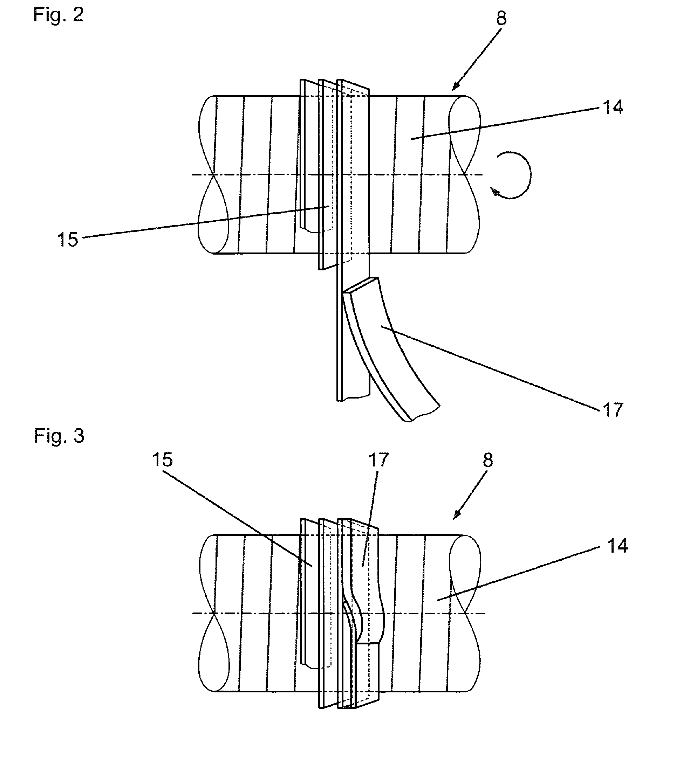

Fig. 2 und 3 zeigen zwei aufeinander folgende Stadien einer möglichen Ausführungsform der Herstellung eines derartigen Laufstreifens 6. Auf einer einen zylindrischen oder einen konturierten Außenumfang aufweisenden Gürteltrommel 8, auf welcher bereits das Gürtelpaket 3 aufgebracht ist, wird vorerst die Laufstreifenbase 4 bei rotierender Gürteltrommel 8 durch Spulen eines Materialstreifen 14 aufgebracht. Anschließend wird der Materialstreifen 15 für die Cap 5 etwa zur Hälfte gespult. Diese Lage ist in Fig. 2 dargestellt. Bei rotierender Trommel 8 wird auf den zugeführten Materialstreifen 15, auf dessen äußere, freie Seite, in Fig. 2 von rechts, ein weiterer Materialstreifen 17 aus einer elektrisch leitfähigen Kautschukmischung aufdoubliert. Der etwas breiter als der Capstreifen 15 hergestellte, insbesondere durch Extrusion erzeugte Materialstreifen 17 wird dabei ohne Unterbrechung des Spulens des Capstreifens 15 vor dem Erreichen der tangentialen Auflaufstelle des Capstreifens 15 an der bereits aufgebrachten Base 4 oder spätestens an der tangentialen Auflaufstelle auf den Capstreifen 15 doubliert. Dabei kann es von Vorteil sein, den Doubliervorgang, welcher insbesondere über eine einzige Trommelumdrehung erfolgt, bei reduzierter Rotationsgeschwindigkeit durchzuführen. Fig. 3 zeigt schematisch den nach einer kompletten Trommelumdrehung aufgebrachten Streifen 17, dessen Enden geringfügig überlappend angeordnet werden. Anfang und Ende des aufdoublierten Streifens 17 werden bevorzugt verjüngt mit Doppelschrägschnitt an den Enden, wobei sowohl in radialer als auch in axialer Richtung schräg abgeschnitten wird, ausgeführt.

Wie bereits erwähnt besteht der Streifen 17 aus einer elektrisch leitfähigen Mischung, insbesondere aus der Basemischung. Der Streifen 17 kann mit einem separaten kleineren Extruder erzeugt werden. Der Streifen 17 kann auch aus einer bereits vorvernetzten Kautschukmischung bestehen. Die Querschnittsfläche des Streifens 17 ist insbesondere rechteckförmig, kann aber auch trapezförmig oder dreieckig sein. Das Doublieren kann ferner durch ein Aufspritzen eines Streifens aus der leitfähigen Kautschukmischung erfolgen, wobei die Kautschukmischung durchgehend oder auch nur stellenweise unter Erzeugen von Patches aufgespritzt werden kann. Das Aufdoublieren und Aufspritzen kann auch an der anderen Seite des Capstreifens 15 erfolgen.

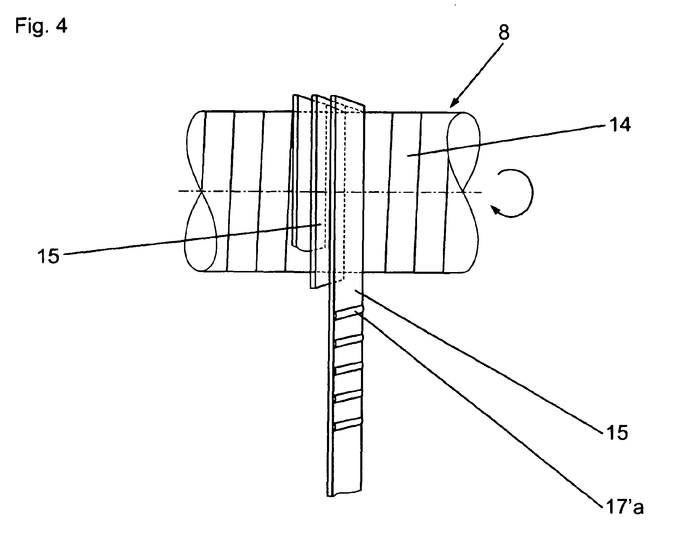

Fig. 4 zeigt eine Ausführungsvariante, bei welcher schmale Profilstücke 17'a in gegenseitigen, insbesondere vorbestimmten Abständen auf den Capstreifen 15 aufdoubliert werden. Die Profilstücke 17'a bilden im fertigen Reifen eine Kette aus ..... elektrisch leitfähigen Passagen. Ausgangsmaterial für die Profilstücke 17'a kann ein extrudierter, gegebenenfalls vorvernetzter Materialstreifen sein, welcher mittels einer Schneideinrichtung quer in schmale Stücke 17'a geschnitten wird und mittels einer geeigneten Einrichtung auf dem Capstreifen 15 positioniert und angedrückt wird.

Abweichend von den dargestellten Ausführungsformen ist es möglich, an mehreren Stellen über den Umfang des Laufstreifens auf die beschriebene und erfindungsgemäße Weise leitfähiges Material, einzubringen. Dabei ist es alternativ auch möglich, diese Maßnahmen nur über einen Teil des Umfanges vorzusehen.

### Bezugszeichenliste

- 1: Innenschicht
- 2: Radialkarkasse
- 3: Gürtelpaket
- 3a: Gürtellage
- 3b: Gürtellage
- 4: Laufstreifenbase
- 5: Laufstreifencap
- 6: Laufstreifen
- 7: Streifen
- 14: Materialstreifen, Base
- 15: Materialstreifen, Cap
- 17: Materialstreifen
- 17'a: Streifenstücke
- 17": Materialstreifen

## Patentansprüche

1. Verfahren zur Herstellung eines Fahrzeugluftreifens mit einem eine elektrisch leitfähige Laufstreifenbase (4) und eine elektrisch nicht leitfähige Laufstreifencap (5) aufweisenden Laufstreifen (6), wobei zumindest die Laufstreifencap (5) durch Spulen von zumindest einem Materialstreifen (15) aus einer Kautschukmischung hergestellt wird, und wobei lokal eine elektrisch leitfähige Kautschukmischung, welche zwischen der Außenseite der Laufstreifencap (5) und der Laufstreifenbase (4) eine elektrisch leitfähige Verbindung herstellt, während des Spulens des Capstreifens (15), vor dem Auflegen desselben, auf zumindest eine der Seiten des Capstreifens (15) aufgebracht wird,
**dadurch gekennzeichnet,**
**dass** die elektrisch leitfähige Kautschukmischung entweder auf den Capstreifen (15) gespritzt wird oder dass Profilstücke (17'a) aus der elektrisch leitfähigen Kautschukmischung in gegenseitigen Abständen auf den Capstreifen (15) aufgebracht werden.

2. Verfahren nach Anspruch 1, **dadurch gekennzeichnet, dass** die elektrisch leitfähige Kautschukmischung patchweise aufgespritzt wird.

3. Verfahren nach Anspruch 1, **dadurch gekennzeichnet, dass** die Profilstücke (17'a) von einem extrudierten Streifen aus der elektrisch leitfähigen Kautschukmischung abgeschnitten werden und unter einem gegenseitigen Abstand auf den Capstreifen (15) aufgebracht werden.

4. Verfahren nach einem der Ansprüche 1 bis 3, **dadurch gekennzeichnet, dass** die elektrisch leitfähige Kautschukmischung vorvernetzt wird.

5. Verfahren nach einem der Ansprüche 1 bis 4, **dadurch gekennzeichnet, dass** die elektrisch leitfähige Kautschukmischung an mehreren Umfangsabschnitten des Capstreifens (15) aufgebracht wird.

## Claims

1. Method for the production of a pneumatic vehicle tyre with a tread (6) having an electrically conductive tread base (4) and an electrically nonconductive tread cap (5), at least the tread cap (5) being produced by coiling at least one strip of material (15) comprising a rubber compound, and an electrically conductive rubber compound that establishes an electrically conductive connection between the outer side of the tread cap (5) and the tread base (4) being applied locally to at least one of the sides of the cap strip (15) during the coiling of the cap strip (15), before placement of the same, **characterized in that** either the electrically conductive rubber compound is sprayed onto the cap strip (15) or profile pieces of the electrically conductive rubber compound (17'a) are applied to the cap strip (15) at spaced-apart intervals.

2. Method according to Claim 1, **characterized in that** electrically conductive rubber compound is sprayed on in patches.

3. Method according to Claim 1, **characterized in that** the profile pieces (17'a) are cut off from an extruded strip of the electrically conductive rubber compound and applied to the cap strip (15) at spaced-apart intervals.

4. Method according to one of Claims 1 to 3, **characterized in that** the electrically conductive rubber compound is pre-crosslinked.

5. Method according to one of Claims 1 to 4, **characterized in that** the electrically conductive rubber compound is applied to a number of circumferential portions of the cap strip (15).

## Revendications

1. Procédé de fabrication d'un bandage pneumatique pour roue de véhicule présentant une base électriquement conductrice (4) de bande de roulement et une bande de roulement (6) dotée d'un chapeau non électriquement conducteur (5) de bande de roulement,
au moins le chapeau (5) de bande de roulement étant réalisé à partir de bobines d'au moins un ruban (15) de matériau en mélange de caoutchouc,
un mélange électriquement conducteur de caoutchouc qui établit une liaison électriquement conductrice entre le côté extérieur du chapeau (5) de bande de roulement et la base (4) de bande de roulement étant appliqué localement sur au moins un des côtés du ruban (15) de chapeau pendant le bobinage du ruban (15) de chapeau et avant la pose de ce dernier,
**caractérisé en ce que**
le mélange électriquement conducteur de caoutchouc est pulvérisé sur le ruban (15) de chapeau ou
**en ce que** des pièces profilées (17'a) en mélange électriquement conducteur de caoutchouc sont appliquées à distance mutuelle sur le ruban (15) de chapeau.

2. Procédé selon la revendication 1, **caractérisé en ce que** le mélange électriquement conducteur de caoutchouc est pulvérisé par zones.

3. Procédé selon la revendication 1, **caractérisé en ce que** les pièces profilées (17'a) sont découpées dans un ruban extrudé de mélange électriquement conducteur de caoutchouc et sont appliquées sur le ruban (15) de chapeau à distance mutuelle.

4. Procédé selon l'une des revendications 1 à 3, **caractérisé en ce que** le mélange électriquement conducteur de caoutchouc est pré-réticulé.

5. Procédé selon l'une des revendications 1 à 4, **caractérisé en ce que** le mélange électriquement conducteur de caoutchouc est appliqué sur plusieurs sections de la périphérie du ruban (15) de chapeau.
